# EUROPEAN PATENT SPECIFICATION

(11) **EP 4 492 542 B1**
(45) Date of publication and mention of the grant of the patent: **06.05.2026**
(21) Application number: 24176818.3
(22) Date of filing: 20.05.2024
(51) Int. Cl.: H01M 50/107, H01M 50/152, H01M 50/184, H01M 50/186, H01M 50/193, H01M 10/052, H01M 10/42, H01M 50/119, H01M 50/147, H01M 50/16, H01M 50/171

(54) **CYLINDRICAL LITHIUM BATTERY CAP SEALING STRUCTURE WITH BUILT-IN BMS BOARD**
ZYLINDRISCHE LITHIUMBATTERIEKAPPENDICHTUNGSSTRUKTUR MIT EINGEBAUTER BMS-PLATTE
STRUCTURE D'ÉTANCHÉITÉ DE CAPUCHON DE BATTERIE AU LITHIUM CYLINDRIQUE AVEC CARTE BMS INTÉGRÉE

(30) Priority: 11.07.2023 CN 202321813477 U
(43) Date of publication of application: 15.01.2025
(73) Proprietor: Chen, Chao, Shenzhen (CN)
(72) Inventor: ZENG, Jinhui, Shenzhen (CN); YANG, Dexin, Shenzhen (CN); LIU, Qiangen, Shenzhen (CN); LIU, Haiyan, Shenzhen (CN)
(74) Representative: Zaboliene, Reda

(56) References cited:
- WO-A1-2019/140924
- CN-A- 112 448 046
- CN-B- 101 752 595

## Description

### Technical Field

The invention relates to the technical field of lithium batteries, and in particular, to a cylindrical lithium battery cap sealing structure with a built-in BMS board. Prior art documents CN 112 448 046 and WO 2019/140924 disclose cylindrical battery cells.

### Background Art

Compared with lead-acid batteries and lead storage batteries, lithium batteries have the advantages of small size, high energy density, high power, long life, small self-discharge, suitable temperature with wide range, stable discharge, etc., so they are widely used in various fields.

The moisture content in the lithium battery plays a vital role in the performance of the lithium battery. When the lithium battery contains water, it will promote the decomposition of LiPF6 in the electrolyte and form HF gas, causing the internal pressure of the battery to increase and deformation, or even burst; in addition, the capacity of lithium batteries decreases with the increase of moisture. Excessive moisture in the lithium battery will also cause the internal resistance of the battery to increase. In severe cases, it may even cause the lithium battery to be unable to charge and discharge normally, and cannot store chemical energy. In order to ensure the safety and performance stability of lithium batteries, their sealing structure is very important.

Existing cylindrical lithium batteries utilize a safety diaphragm arranged on the cap to prevent the lithium battery from deforming. When the internal pressure of the lithium battery is too large, the air pressure acts on the safety diaphragm, causing the V-shaped part of the safety diaphragm to deform, the internal volume of the lithium battery increases, and the air pressure decreases. In addition, in order to control the moisture content in the lithium battery, the lithium battery is produced in a drying room. However, existing cylindrical lithium batteries do not have a BMS protection board inside, nor do they have a sealing waterproof structure corresponding to the BMS protection board. External moisture can still enter the inside of the lithium battery, causing the capacity of the lithium battery to decrease and the internal resistance to increase.

Therefore, a cylindrical lithium battery cap sealing structure with a built-in BMS board is proposed in order to solve the problems raised above.

### Summary of the Invention

The purpose of the invention is to provide a cylindrical lithium battery cap sealing structure with a built-in BMS board to solve the problem that the cylindrical lithium battery cap currently on the market proposed by the above background does not have a BMS protection board and does not have a corresponding sealing waterproof structure of the BMS protection board, which will allow external moisture to still enter the inside of the lithium battery, causing the problem of reduced lithium battery capacity and increased internal resistance.

In order to achieve the above purpose, the invention provides the following technical solutions: a cylindrical lithium battery cap sealing structure with a built-in BMS board, including a steel housing, wherein an outer surface of a side of the steel housing is fixedly connected to a bottom housing, and the top surface of the bottom housing is fixedly provided with a battery roll core adapted to the steel housing;

and also including: a cap mechanism, wherein an outer surface of a side of the cap mechanism is fixedly connected to a connecting housing, and an outer surface of a side of the connecting housing is integrally connected to an outer surface of a side of the steel housing.

The cap mechanism includes a plastic bracket, and an outer surface of a side of the plastic bracket and an inner surface of a side of the connecting housing are slidably arranged.

By adopting the above technical solution, the mainboard can be easily and stably installed through the plastic bracket.

Preferably, a positive aluminum plate is detachably installed on the inner bottom surface of the plastic bracket, and a mainboard is placed on the top surface of the positive aluminum plate.

By adopting the above technical solution, the battery can be easily protected through the mainboard, thereby improving the service life of the battery.

Preferably, a negative hardware ring is placed on the top surface of the mainboard, an outer surface of a side of the negative hardware ring and an inner surface of a side of the plastic bracket are engaged with each other, and the negative hardware ring is adapted to both the positive aluminum plate and the mainboard.

By adopting the above technical solution, when the battery is connected to external electrical components through the positive aluminum plate and the negative hardware ring, stable discharge can be achieved.

Preferably, a positive plastic cover is detachably installed on an outer surface of a side of the mainboard, and an outer surface of a side of the positive plastic cover and an inner surface of a side of the negative hardware ring are engaged with each other.

By adopting the above technical solution, the mainboard is conveniently installed stably and the overall structure has strong unity.

Preferably, the positive aluminum plate, the mainboard, the negative hardware ring and the positive plastic cover are all located inside the plastic bracket.

By adopting the above technical solution, the lithium battery has strong sealing, stable structure and high safety.

Compared with the prior art, the beneficial effects of the invention are: the cylindrical lithium battery cap sealing structure with a built-in BMS board can improve the sealing performance, thereby preventing external moisture from entering the inside of the steel housing, and have high safety. The specific contents are as follows:

1. The cylindrical lithium battery cap sealing structure with a built-in BMS board not only achieves the sealing structure function, but also enhances the monitoring and control of the lithium battery, improving the performance and safety of the lithium battery. In addition, it features a simple structure, easy installation, and greater convenience.

2. The mainboard, negative hardware ring, and positive aluminum plate in the cylindrical lithium battery cap sealing structure with a built-in BMS board are all circular, whose structural feature is conducive to sealing. A plastic bracket is annular and has a sealing adhesive groove, when matched with the steel housing, a complete set of annular structures is formed, which will greatly improve the sealing of the storage battery, thus preventing external moisture from entering the inside of the steel housing.

### Brief Description of the Drawings

FIG. 1 is a schematic diagram of the overall three-dimensional structure of the invention;
FIG. 2 is a schematic diagram of the overall split structure of the invention;
FIG. 3 is a schematic diagram of the three-dimensional structure of the cap mechanism of the invention;
FIG. 4 is a schematic diagram of the disassembled structure of the cap mechanism of the invention;
FIG. 5 is a schematic diagram of the overall cross-sectional structure of the invention; and
FIG. 6 is an enlarged structural schematic diagram at position A in FIG. 5 of the invention.

In the drawings: 1. steel housing; 2. cap mechanism; 10. bottom housing; 11. battery roll core; 12. connecting housing; 20. plastic bracket; 21. positive aluminum plate; 22. mainboard; 23. negative hardware ring; 24. positive plastic cover.

### Detailed Description of the Invention

The technical solutions in the embodiments of the invention will be clearly and completely described below in conjunction with the accompanying drawings in the embodiments of the invention. Obviously, the described embodiments are only part of the embodiments of the invention, rather than all. Based on the embodiments of the invention, all other embodiments obtained by those of ordinary skill in the art without creative efforts fall within the scope of protection of the invention.

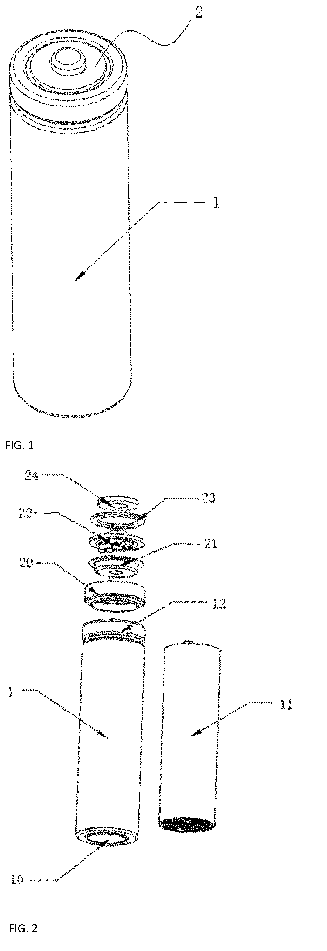

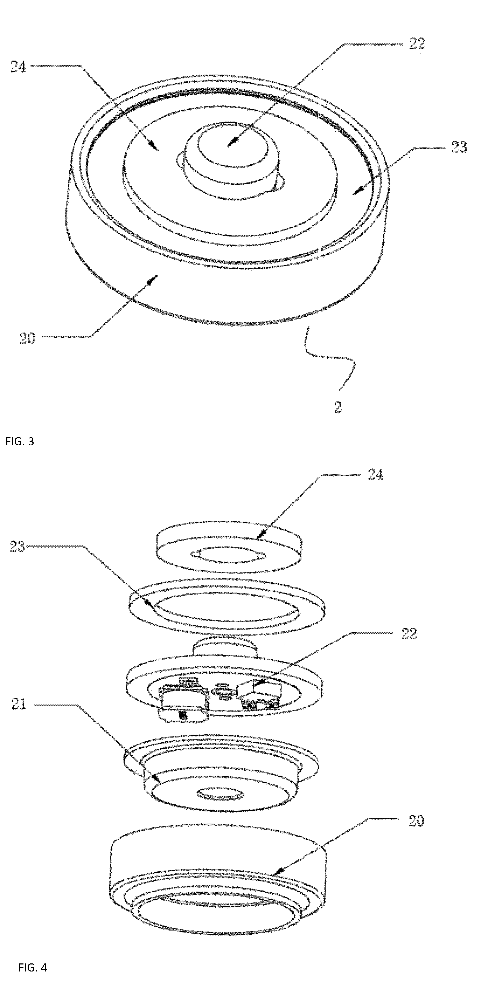

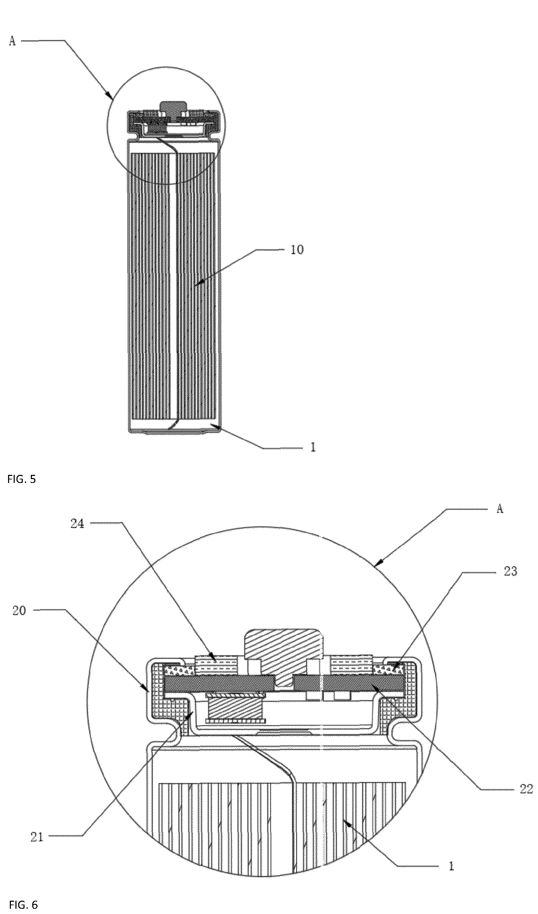

Refer to FIG. 1-FIG. 6, the invention provides a technical solution: a cylindrical lithium battery cap sealing structure with a built-in BMS board, including a steel housing 1, wherein an outer surface of a side of the steel housing 1 is fixedly connected to a bottom housing 10, a top surface of the bottom housing 10 is fixedly provided with a battery roll core 11 adapted to the steel housing 1. A plastic bracket 20 is made of PP soft material. On the outside, the plastic bracket 20 is pressed annularly by three sides, the bottom, side and top surfaces of the steel housing 1. Through the triple tight fit, flexible plastic tightly fit the steel housing 1, achieving the outside sealing. A negative hardware ring 23 and a mainboard 22 play a supporting role to avoid the overall rupture, whose safe and reliable structure can make the production efficiency and quality greatly improved, and achieve automated production. The mainboard 22 is the existing BMS protection board;

And also including: a cap mechanism 2, wherein an outer surface of a side of the cap mechanism 2 is fixedly connected to a connecting housing 12, and an outer surface of a side of the connecting housing 12 is integrally connected to an outer surface of a side of the steel housing 1. The cap mechanism 2 includes a plastic bracket 20. The plastic bracket 20 is annular and has a sealing adhesive groove, when matched with the steel housing 1, a complete set of annular structures is formed. During installation, gluing in the sealing adhesive groove will achieve an inner side seal, with good sealability. And an outer surface of a side of the plastic bracket 20 and an inner surface of a side of the connecting housing 12 are slidably arranged. A positive aluminum plate 21 is detachably installed on the inner bottom surface of the plastic bracket 20, and a mainboard 22 is placed on the top surface of the positive aluminum plate 21, a negative hardware ring 23 is placed on the top surface of the mainboard 22, an outer surface of a side of the negative hardware ring 23 and an inner surface of a side of the plastic bracket 20 are engaged with each other, and the negative hardware ring 23 is adapted to both the positive aluminum plate 21 and the mainboard 22. A positive plastic cover 24 is detachably installed on an outer surface of a side of the mainboard 22, and an outer surface of a side of the positive plastic cover 24 and an inner surface of a side of the negative hardware ring 23 are engaged with each other. The positive aluminum plate 21, the mainboard 22, the negative hardware ring 23 and the positive plastic cover 24 are all located inside the plastic bracket 20. As shown in FIG. 1-FIG.6, the mainboard 22, negative hardware ring 23, and positive aluminum plate 21 in the cylindrical lithium battery cap sealing structure with a built-in BMS board are all circular, whose structural feature is conducive to sealing. A plastic bracket 20 is annular and has a sealing adhesive groove, when matched with the steel housing 1, a complete set of annular structures is formed, which will greatly improve the sealing of the storage battery, thus preventing external moisture from entering the inside of the steel housing 1.

Working principles: when using the cylindrical lithium battery cap sealing structure with a built-in BMS board, firstly, the battery roll core 11 is installed inside the steel housing 1 as shown in FIG. 1-FIG. 6, and then the plastic bracket 20 is installed and glued. After the plastic bracket 20 is installed, the positive aluminum plate 21, the mainboard 22, the negative hardware ring 23 and the positive plastic cover 24 are tightly installed. After the overall installation of the storage battery is completed, it can be used as a power supply. The mainboard 22, the negative hardware ring 23, and the positive aluminum plate 21 in the cylindrical lithium battery cap sealing structure with a built-in BMS board are all circular, whose structural feature is conducive to sealing. A plastic bracket 20 is annular and has a sealing adhesive groove, when matched with the steel housing 1, a complete set of annular structures is formed, which will greatly improve the sealing of the battery, thus preventing external moisture from entering the inside of the steel housing 1.

Contents not described in detail herein belong to the prior art known to those skilled in the art.

Although the invention has been described in detail with reference to the foregoing embodiments, those skilled in the art can still modify the technical solutions recorded in the foregoing embodiments, or equally replace some of the technical features thereof. Any modifications, equivalent substitutions, improvements, etc. made within principles of the invention shall be included in the protection scope of the invention.

## Claims

1. A cylindrical lithium battery cap sealing structure with a built-in BMS board, **characterized by** comprising a steel housing (1), an outer surface of a side of the steel housing (1) being fixedly connected to a bottom housing (10), and a top surface of the bottom housing (10) being fixedly provided with a battery roll core (11), and the battery roll core (11) being adapted to the steel housing (1);
and further comprising:
a cap mechanism (2), an outer surface of a side of the cap mechanism (2) being fixedly connected to a connecting housing (12), and an outer surface of a side of the connecting housing (12) being integrally connected to an outer surface of a side of the steel housing (1);
the cap mechanism (2) comprises a plastic bracket (20), an outer surface of a side of the plastic bracket (20) and an inner surface of a side of the connecting housing (12) being slidably arranged.

2. The cylindrical lithium battery cap sealing structure with a built-in BMS board of claim 1, **characterized in that** a positive aluminum plate (21) is detachably installed on the inner bottom surface of the plastic bracket (20), and a mainboard (22) is placed on the top surface of the positive aluminum plate (21).

3. The cylindrical lithium battery cap sealing structure with a built-in BMS board of claim 2, **characterized in that** a negative hardware ring (23) is placed on the top surface of the mainboard (22), an outer surface of a side of the negative hardware ring (23) and an inner surface of a side of the plastic bracket (20) are engaged with each other, and the negative hardware ring (23) is adapted to both the positive aluminum plate (21) and the mainboard (22).

4. The cylindrical lithium battery cap sealing structure with a built-in BMS board of claim 3, **characterized in that** a positive plastic cover (24) is detachably installed on an outer surface of a side of the mainboard (22), and an outer surface of a side of the positive plastic cover (24) and an inner surface of a side of the negative hardware ring (23) are engaged with each other.

5. The cylindrical lithium battery cap sealing structure with a built-in BMS board of claim 4, **characterized in that** the positive aluminum plate (21), the mainboard (22), the negative hardware ring (23) and the positive plastic cover (24) are all located inside the plastic bracket (20).

## Patentansprüche

1. Zylindrische Lithiumbatterie-Kappenabdichtungsstruktur mit eingebauter BMS-Platine, **dadurch gekennzeichnet, dass** sie ein Stahlgehäuse (1) umfasst, wobei eine Außenfläche einer Seite des Stahlgehäuses (1) fest mit einem Bodengehäuse (10) verbunden ist, und eine obere Fläche des Bodengehäuses (10) fest mit einem Batterierollenkern (11) versehen ist, und der Batterierollenkern (11) an das Stahlgehäuse (1) angepasst ist;
und ferner umfassend:
einen Kappenmechanismus (2), wobei eine Außenfläche einer Seite des Kappenmechanismus (2) fest mit einem Verbindungsgehäuse (12) verbunden ist, und eine Außenfläche einer Seite des Verbindungsgehäuses (12) einstückig mit einer Außenfläche einer Seite des Stahlgehäuses (1) verbunden ist;
wobei der Kappenmechanismus (2) eine Kunststoffhalterung (20) umfasst, wobei eine Außenfläche einer Seite der Kunststoffhalterung (20) und eine Innenfläche einer Seite des Verbindungsgehäuses (12) verschiebbar angeordnet sind.

2. Zylindrische Lithiumbatterie-Kappenabdichtungsstruktur mit eingebauter BMS-Platine nach Anspruch 1, **dadurch gekennzeichnet, dass** eine positive Aluminiumplatte (21) lösbar an der inneren Bodenfläche der Kunststoffhalterung (20) angebracht ist, und eine Hauptplatine (22) auf der oberen Fläche der positiven Aluminiumplatte (21) platziert ist.

3. Zylindrische Lithiumbatterie-Kappenabdichtungsstruktur mit eingebauter BMS-Platine nach Anspruch 2, **dadurch gekennzeichnet, dass** ein negativer Hardware-Ring (23) auf der oberen Fläche der Hauptplatine (22) platziert ist, wobei eine Außenfläche einer Seite des negativen Hardware-Rings (23) und eine Innenfläche einer Seite der Kunststoffhalterung (20) miteinander in Eingriff stehen, und der negative Hardware-Ring (23) sowohl an die positive Aluminiumplatte (21) als auch an die Hauptplatine (22) angepasst ist.

4. Zylindrische Lithiumbatterie-Kappenabdichtungsstruktur mit eingebauter BMS-Platine nach Anspruch 3, **dadurch gekennzeichnet, dass** eine positive Kunststoffabdeckung (24) lösbar an einer Außenfläche einer Seite der Hauptplatine (22) angebracht ist, und eine Außenfläche einer Seite der positiven Kunststoffabdeckung (24) und eine Innenfläche einer Seite des Hardware-Rings (23) miteinander in Eingriff stehen.

5. Zylindrische Lithiumbatterie-Kappenabdichtungsstruktur mit eingebauter BMS-Platine nach Anspruch 4, **dadurch gekennzeichnet, dass** die positive Aluminiumplatte (21), die Hauptplatine (22), der negative Hardware-Ring (23) und die positive Kunststoffabdeckung (24) alle innerhalb der Kunststoffhalterung (20) angeordnet sind.

## Revendications

1. Une structure d'étanchéité de capuchon de batterie au lithium cylindrique avec carte BMS intégrée, **caractérisée en ce qu'**elle comprend un boîtier en acier (1), une surface extérieure d'un côté du boîtier en acier (1) étant reliée fixement à un boîtier inférieur (10), et une surface supérieure du boîtier inférieur (10) étant pourvue fixement d'un noyau d'enroulement de batterie (11), et le noyau d'enroulement de batterie (11) étant adapté au boîtier en acier (1) ;
et comprenant en outre :
un mécanisme de capuchon (2), une surface extérieure d'un côté du mécanisme de capuchon (2) étant reliée fixement à un boîtier de connexion (12), et une surface extérieure d'un côté du boîtier de connexion (12) étant reliée de manière intégrale à une surface extérieure d'un côté du boîtier en acier (1) ;
le mécanisme de capuchon (2) comprenant un support en plastique (20), une surface extérieure d'un côté du support en plastique (20) et une surface intérieure d'un côté du boîtier de connexion (12) étant disposées de manière coulissante.

2. La structure d'étanchéité de capuchon de batterie au lithium cylindrique avec carte BMS intégrée selon la revendication 1, **caractérisée en ce qu'**une plaque positive en aluminium (21) est installée de manière amovible sur la surface inférieure intérieure du support en plastique (20), et une carte mère (22) est placée sur la surface supérieure de la plaque positive en aluminium (21).

3. La structure d'étanchéité de capuchon de batterie au lithium cylindrique avec carte BMS intégrée selon la revendication 2, **caractérisée en ce qu'**un anneau métallique négatif (23) est placé sur la surface supérieure de la carte mère (22), une surface extérieure d'un côté de l'anneau métallique négatif (23) et une surface intérieure d'un côté du support en plastique (20) sont en prise l'une avec l'autre, et l'anneau métallique négatif (23) est adapté à la fois à la plaque positive en aluminium (21) et à la carte mère (22).

4. La structure d'étanchéité de capuchon de batterie au lithium cylindrique avec carte BMS intégrée selon la revendication 3, **caractérisée en ce qu'**un couvercle positif en plastique (24) est installé de manière amovible sur une surface extérieure d'un côté de la carte mère (22), et une surface extérieure d'un côté du couvercle positif en plastique (24) et une surface intérieure d'un côté de l'anneau métallique négatif (23) sont en prise l'une avec l'autre.

5. La structure d'étanchéité de capuchon de batterie au lithium cylindrique avec carte BMS intégrée selon la revendication 4, **caractérisée en ce que** la plaque positive en aluminium (21), la carte mère (22), l'anneau métallique négatif (23) et le couvercle positif en plastique (24) sont tous situés à l'intérieur du support en plastique (20).
